# EUROPEAN PATENT APPLICATION

(11) **EP 2 111 013 A1**
(43) Date of publication of application: **21.10.2009**
(21) Application number: 08800753.9
(22) Date of filing: 02.09.2008
(51) Int. Cl.: H04L 29/08

(54) **TIDINESS METHOD, MANAGEMENT METHOD, DEVICE AND SYSTEM OF APPEARANCE CONTEXT**

(30) Priority: 06.09.2007 CN 200710145634
(71) Applicant: Huawei Technologies Co., Ltd., Longgang District, Shenzhen Guangdong 518129 (CN)
(72) Inventor: WANG, Rui, Shenzhen (CN); CHAI, Xiaoqian, Shenzhen (CN); LI, Kepeng, Shenzhen (CN); ZHAO, Hui, Shenzhen (CN); LUO, Yaoping, Shenzhen (CN)
(74) Representative: Kreuz, Georg Maria
(86) International application number: PCT/CN2008/072241
(87) International publication number: WO 2009/033403

(57) **Abstract**

A method for sorting look-and-feel contents includes: obtaining a look-and-feel package which comprises attribute information of the look-and-feel package; and creating an appropriate storage object for the look-and-feel package and storing the look-and-feel package in association with the storage object. A method for managing look-and-feel contents includes: receiving a look-and-feel package management command which comprises attribute information of a look-and-feel package and type information of the management command; and performing an appropriate management operation on a storage object associated with the look-and-feel package according to the type information of the management command. A terminal includes a look-and-feel package receiving unit, configured to receive a look-and-feel package which includes attribute information of the look-and-feel package; and a sorting unit, configured to: resolve the look-and-feel package, create an appropriate storage object, and store the look-and-feel package in association with the storage object.

## Description

This application claims priority to Chinese application No. 200710145634.6, filed with the Chinese Patent Office on September 6, 2007 and entitled "Method and Device for Sorting and Managing Look-and-Feel Contents", which is incorporated herein by reference in its entirety.

### Field of the Invention

The present invention relates to communications technologies, and in particular, to a method for sorting look-and-feel contents, a method for managing look-and-feel contents, a terminal, a look-and-feel content server, and a look-and-feel management server and system.

### Background of the Invention

Communications terminals have been necessary contact tools in people's daily life in recent years and people are no longer satisfied with look-and-feel contents (contents that a terminal presents to a user, such as wallpaper, ring tone, and menu) included with the terminal upon delivery. They are requiring more personalized contents. In conventional art, to meet the personalized requirements on the look-and-feel of a terminal, look-and-feel contents in different styles are provided on a website by a Service Provider (SP). A user orders a look-and-feel content with the SP, and the SP delivers the ordered look-and-feel content to the terminal of the user. Upon reception of the look-and-feel content, the user applies the content to the terminal so as to get personalized look-and-feel.

The Open Mobile Alliance (OMA) has defined applicable specifications for the browser and Device Management (DM) of mobile devices. With the DM specifications, a DM server can install and upgrade software and firmware for terminal devices, and configure parameters for terminal devices. The core of terminal management by a DM server is a DM tree, which stores basic parameters of a terminal and all information requiring management. Vendors and DM application developers may define appropriate management objects based on the needs of services and mount the objects onto the DM tree. When it is necessary to manage information of a terminal, the terminal controls applicable objects in the DM tree to change in accordance with the management type according to a DM command delivered by the DM server.

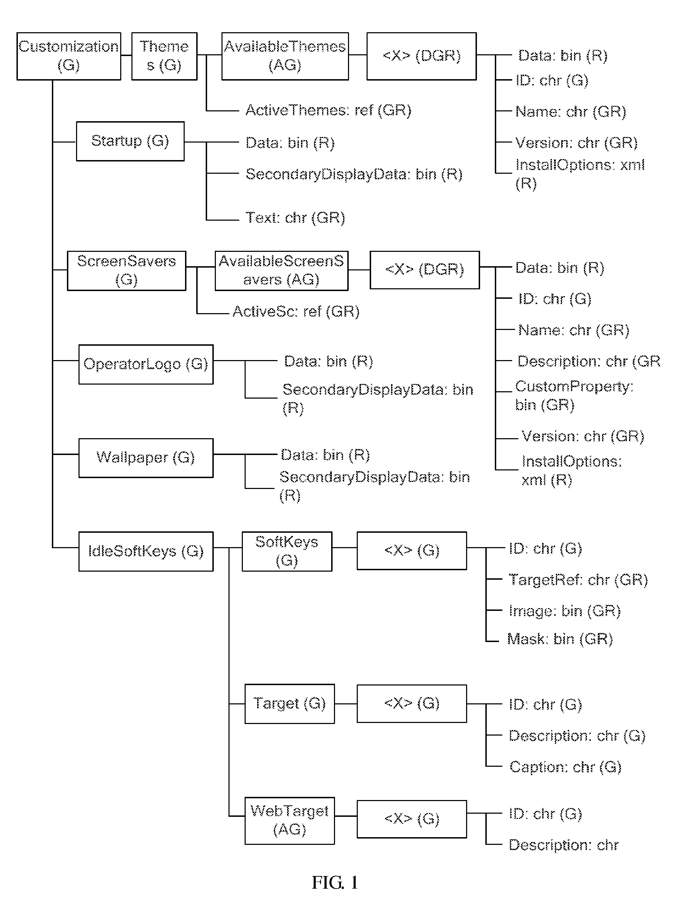

According to a DM based solution for look-and-fell content customization in conventional art, a management object node for storing custom look-and-feel contents is set in the DM tree of a terminal and a server changes information of objects in the management object node so as to manage custom look-and-feel contents. As shown in FIG. 1, a Customization node (which is the look-and-feel management object node) includes such look-and-feel elements as Wallpaper and OperatorLogo; under each element, there are two data content nodes (Data and SecondaryDisplayData) which store data contents of custom look-and-feel elements. In this solution, when an SP provides look-and-feel element contents for a terminal according to custom information, the SP notifies the DM server to deliver a corresponding DM command to the terminal, where the command includes data contents of the look-and-feel element and information of storage positions specified for the contents; when the terminal receives the DM command, the terminal stores the data contents of the look-and-feel element into the nodes indicated by the storage position information.

During research and practice of the conventional art, however, the inventor finds that the conventional art has at least the following weaknesses:

1. Limited custom look-and-feel contents available for users

According to the conventional art, only one node in the DM tree of a terminal is related to look-and-feel content customization and only two data content nodes exist under each look-and-feel element node of the node. This means one look-and-feel element can store at most two custom contents. The look-and-feel contents available for users are very limited.

2. Low efficiency in managing look-and-feel contents

In the conventional art, management of look-and-feel contents is based on look-and-feel elements. When a same operation on multiple look-and-feel elements is required, separate operations must be performed with respect to every look-and-feel element. The management of look-and-feel contents is therefore inefficient.

### Summary of the Invention

Various embodiments of the present invention provide a look-and-feel content sorting method, a terminal, a look-and-feel content server, and a look-and-feel management server and system so as to offer more look-and-feel contents for a user.

Various embodiments of the present invention also provide a look-and-feel content management method so as to increase the efficiency in managing look-and-feel contents.

The above objectives are achieved through the following technical solution.

A method for sorting look-and-feel contents includes: obtaining a look-and-feel package which includes attribute information of the look-and-feel package; and creating an appropriate storage object for the look-and-feel package and storing the look-and-feel package in association with the storage object.

A method for managing look-and-feel contents includes: receiving a look-and-feel package management command which includes attribute information of a look-and-feel package and type information of the management command; and performing an appropriate management operation on a storage object associated with the look-and-feel package according to the type information of the management command.

A terminal includes: a look-and-feel package receiving unit, configured to receive a look-and-feel package which includes attribute information of the look-and-feel package; and a sorting unit, configured to: resolve the look-and-feel package, create an appropriate storage object for the package and store the look-and-feel package in association with the storage object.

A terminal includes: a command receiving unit, configured to receive a storage object creation command applicable to a look-and-feel package which includes attribute information of the look-and-feel package; and a sorting unit, configured to: execute the storage object creation command to create an appropriate storage object for the look-and-feel package and store the look-and-feel package in association with the storage object.

A look-and-feel content server includes: a look-and-feel package generating unit, configured to generate a look-and-feel package which includes attribute information of the look-and-feel package; and a look-and-feel package sending unit, configured to send the look-and-feel package.

A look-and-feel management server includes: a management command generating unit, configured to generate a look-and-feel package management command which includes attribute information of the look-and-feel package and type information of the management command; and a management command sending unit, configured to send the look-and-feel management command.

A look-and-feel management server includes: a look-and-feel package receiving unit, configured to receive a look-and-feel package which includes attribute information of the look-and-feel package; a storage object creation command generating unit, configured to: resolve the look-and-feel package and generate an appropriate storage object creation command; and a storage object creation command sending unit, configured to send the storage object creation command.

A look-and-feel management system includes a look-and-feel content server and a terminal. The look-and-feel content server is configured to: generate a look-and-feel package and send the package to the terminal, where the look-and-feel package includes attribute information of the look-and-feel package. The terminal is configured to: receive the look-and-feel package, create an appropriate storage object for the look-and-feel package and store the look-and-feel package in association with the storage object.

The above technical solution provides the following benefit:

The embodiments of the present invention provide look-and-feel content management based on look-and-feel packages. By storing attribute information of a look-and-feel package in association with the content storage object of the package, multiple look-and-feel packages differentiated by their attribute information can be stored in one terminal so that more look-and-feel contents can be offered to a user.

The above technical solution also provides the following benefit:

The embodiments of the present disclosure provide a look-and-feel content management solution based on look-and-feel packages. When a look-and-feel content is managed, the related look-and-feel package can be retrieved according to the attribute information of the package so that the specified look-and-feel package is managed. Because a look-and-feel package is usually a set of multiple look-and-feel elements, package based management can manage the multiple look-and-feel elements in the package in a same manner without the need of separate operations on each look-and-feel element, and therefore the management efficiency is higher.

### Brief Description of the Drawings

FIG. 1 is an exemplary drawing for a look-and-feel management object node in conventional art;

FIG. 2 is a flowchart of a first embodiment of the method for sorting look-and-feel contents;

FIG. 3 is a flowchart of a second embodiment of the method for sorting look-and-feel contents;

FIG. 4 is an exemplary drawing for a look-and-feel package node in the second embodiment of the method for sorting look-and-feel contents;

FIGs. 5-7 are flowcharts of the third to fifth embodiments of the method for sorting look-and-feel contents;

FIG. 8 is an exemplary drawing for a look-and-feel package node in the fifth embodiment of the method for sorting look-and-feel contents;

FIG. 9 is a flowchart of a first embodiment of the method for managing look-and-feel contents;

FIG. 10 shows a structure of a fourth embodiment of the terminal;

FIG. 11 shows a structure of a third embodiment of the look-and-feel management server; and

FIGs. 12-14 respectively show structures of the first to third embodiments of the look-and-feel management system.

### Detailed Description of the Invention

The exemplary embodiments of a method for sorting look-and-feel contents, a method for managing look-and-feel contents and the corresponding device provided by the present disclosure is described in detail by reference to the accompanying drawings.

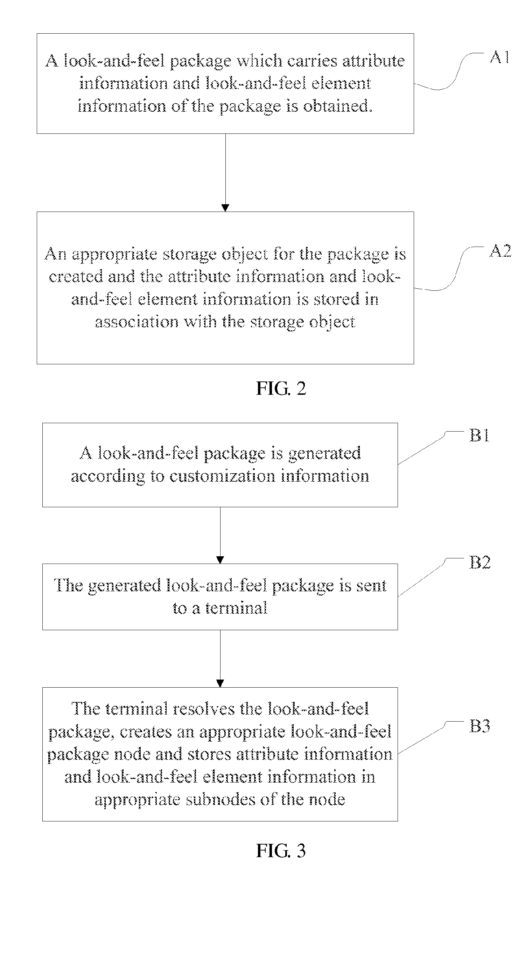

As shown in FIG. 2, a method for sorting look-and-feel contents according to the first embodiment includes the steps as follows:

A1. A look-and-feel package is obtained. The package includes attribute information of the look-and-feel package and look-and-feel element information.

According to this embodiment, the look-and-feel package includes attribute information of the look-and-feel package and information of look-and-feel elements (such as wallpaper, ring tone and menu), and the information of look-and-feel elements may further include attribute information and content information of the look-and-feel elements. The attribute information of the look-and-feel package (or element) is used to differentiate the package (or element) from other look-and-feel packages (or elements) and in particular may include a package (or element) name, version information or provider information; the content information of a look-and-feel element may be the data content of the element or identifier of the element (such as the Uniform Resource Identifier (URI) of the element data content).

The obtained look-and-feel package may only include attribute information of the package without including information of look-and-feel elements, which will not impact the implementation of the first embodiment.

A2. An appropriate storage object for the look-and-feel package is generated, and the attribute information of the look-and-feel package and look-and-feel element information is stored in association with the storage object.

According to this embodiment, the terminal may directly resolve the look-and-feel package, generate the appropriate storage object and store the attribute information of the look-and-feel package and look-and-feel element information in association with the storage object; or a look-and-feel management server resolves the package, generates an appropriate storage object creation command and delivers the command (or delivers the command via a DM server) to the terminal and the terminal executes the command to generate the appropriate storage object and store the attribute information of the look-and-feel package and look-and-feel element information in association with the storage object.

According to this embodiment, the storage object associated with the look-and-feel package is in particular an appropriate look-and-feel package node in the DM tree and a directory associated with the package in the storage space.

Creating the appropriate storage object may be creating an appropriate look-and-feel package node in the DM tree; and storing the attribute information of the look-and-feel package and look-and-feel element information in association with the storage object may be storing the attribute information of the look-and-feel package and look-and-feel element information into appropriate subnodes of the look-and-feel package node.

Alternatively, creating the appropriate storage object may be creating an appropriate directory for the look-and-feel package in the storage space; and storing the attribute information of the look-and-feel package and look-and-feel element information in association with the storage object may be storing the attribute information of the look-and-feel package and look-and-feel element information into the appropriate subdirectories of the directory.

Or, creating the appropriate storage object may be creating an appropriate look-and-feel package node and appropriate look-and-feel element nodes in the DM tree; and storing the attribute information of the look-and-feel package and look-and-feel element information in association with the storage object may be storing the attribute information of the look-and-feel package into the appropriate subnodes of the look-and-feel package node and storing the look-and-feel element information into the appropriate subnodes of the look-and-feel element nodes.

This embodiment provides look-and-feel content management based on look-and-feel packages. By storing attribute information of a look-and-feel package in association with the content storage object of the package, multiple look-and-feel packages differentiated by their attribute information can be stored in one terminal so that more look-and-feel contents can be offered to a user.

As shown in FIG. 3, a method for sorting look-and-feel contents according to the second embodiment includes the steps as follows:

B1. A look-and-feel content server generates a look-and-feel package according to customization information. The look-and-feel package includes attribute information of the package and look-and-feel element information.

An example of the look-and-feel package is given below. The name of the package is Countryside, and the package includes a wallpaper Flower.jpg and a ring tone Water.wav.

```
    <LFCPackage>
         <Head> <!--Below are additional information. The resolving program will
 place all the following contents under subnodes. An element name is a node name and the
 element content is the node value-->
             <Name>Countryside</Name>
             <version>100</version>
             <Provider>www.mobilegadget.com</Provider>
             </Head>
         <Body> <!--Below are look-and-feel elements, which will be saved in
 subnodes-->
             <Element Name="Wallpaper"> <!--The element attribute value is the
 name of the look-and-feel element subnode-->
                  <Name>Flower.jpg</Name> <!--A sub-element of Element,
 mounted under the look-and-feel element node as a subnode, which is named and assigned
 a value the same as the Head-->
                  <Version> 100</Version>
                  <Data> ..bin of the flower.jpg.. </Data>
             </Element>
             <Element Name="Ringtone">
                  <Name>Water.wav</Name>
                  <Version> 100</Version>
                  <Data> ..bin of the water.wav.. </Data>
             </Element>
         </Body>
    </LFCPackage>
```

In the above look-and-feel package, attribute information of the look-and-feel package and look-and-feel elements is stored between <Name> and </Name>, <Version> and </Version> and <Provider> and </Provider> and the data content of a look-and-feel element is stored between <Data> and </Data>.

B2. The look-and-feel content server delivers the generated look-and-feel package to a terminal.

B3. The terminal receives the package, resolves it and creates an appropriate look-and-feel package node in its DM tree, and stores the attribute information of the look-and-feel package and information of the look-and-feel elements to appropriate subnodes of the look-and-feel package node.

The following gives an example of a look-and-feel package node created in the DM tree corresponding to the Countryside package.

```
    <MgmtTree>
      <Node>
          <NodeName>LFC</NodeName>
          <Node>
             <NodeName>Package1</NodeName>
             <Node>
                <NodeName>Name</NodeName>
                <Value>Countryside</Value>
             </Node>
             <Node>
                <NodeName>Version</NodeName>
                <Value>100</Value>
             </Node>
             <Node>
                <NodeName>Provider</NodeName>
                <Value> www.mobilegadget.com </Value>
             </Node>
             <Node>
                  <NodeName>Wallpaper</NodeName>
                    <Node>
                      <NodeName>Name</NodeName>
                      <Value>Flower.jpg</Value>
                    </Node>
                    <Node>
                      <NodeName>Version</NodeName>
                      <Value>100</Value>
                    </Node>
                    <Node>
                      <NodeName>Data</NodeName>
                      <Value> ..bin of the flower.jpg..</Value>
                    </Node>
             </Node>
             <Node>
                  <NodeName>Ringtone</NodeName>
                    <Node>
                      <NodeName>Name</NodeName>
                      <Value>Water.wav</Value>
                    </Node>
                    <Node>
                      <NodeName>Version</NodeName>
                      <Value>100</Value>
                    </Node>
                    <Node>
                      <NodeName>Data</NodeName>
                      <Value> ..bin of the water.wav..</Value>
                    </Node>
             </Node>
          </Node>
      </Node>
    </MgmtTree>
```

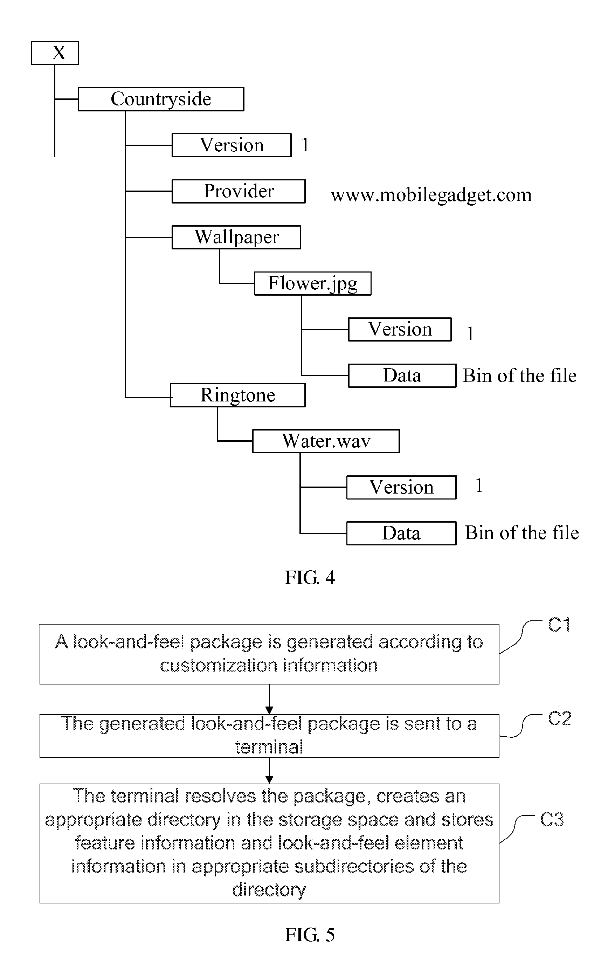

FIG. 4 gives a schematic drawing of the above look-and-feel package node, where: X is an extendable node and multiple look-and-feel package nodes can be placed under the node; the Countryside node under X is the look-and-feel package node corresponding to the Countryside package; the version information and provider information of the look-and-feel package are recorded under Countryside; two middle nodes Wallpaper and Ringtone are also under Countryside. A middle node named Flower.jpg is recorded under Wallpaper, indicating that the look-and-feel package includes a terminal wallpaper named Flower.jpg; the version information and data content of the wallpaper are recorded under the middle node. Likewise, a middle node named Water.wav is recorded under Ringtone, indicating that the look-and-feel package includes a ring tone named Water.wav; the version information and data content of the ring tone are recorded under the middle node.

As shown in FIG. 5, a method for sorting look-and-feel contents according to the third embodiment of the present invention includes the steps as follows:

C1. A look-and-feel content server generates a look-and-feel package according to customization information. The look-and-feel package includes attribute information of the package and look-and-feel element information.

C2. The look-and-feel content server delivers the generated look-and-feel package to a terminal.

C3. The terminal receives the package, resolves it, creates an appropriate directory for the package in its storage space, and stores the attribute information of the look-and-feel package and element information into appropriate subdirectories of the directory.

Take the Countryside package in the second embodiment as an example. The terminal creates a directory named Countryside under a specific directory (such as \application data\LFC\) in the storage space and creates a directory named Wallpaper and a directory named Ringtone under the directory, and stores Flower.jpg under Wallpaper and Water.wav under Ringtone; a file named contentinfo is stored under Countryside, Wallpaper and Ringtone respectively, recording applicable attribute information. The following is an example of contentinfo that records attribute information of Countryside:
\application data\LFC\Countryside\contentinfo
[Name] = Countryside
[Version] = 1.00
[Provider] = www.mobilegadget.com

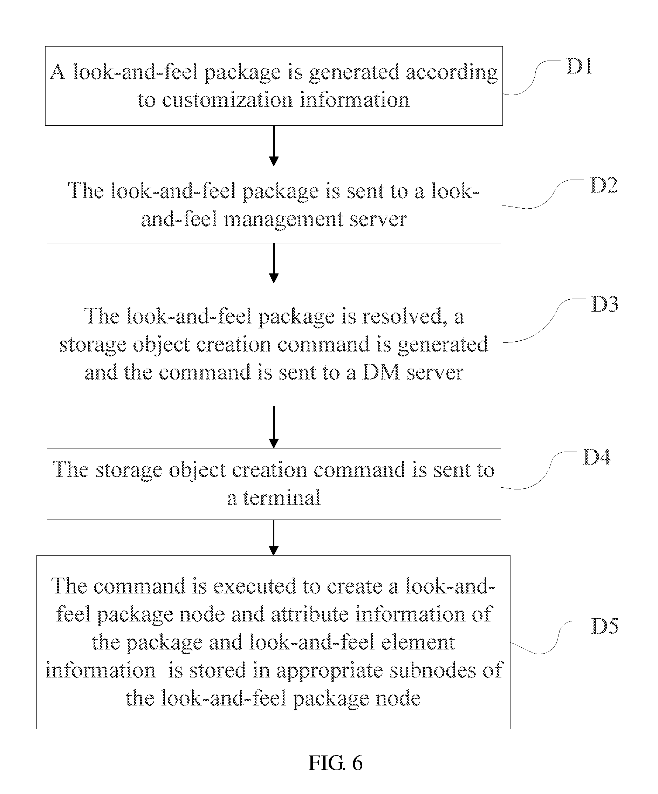

As shown in FIG. 6, a method for sorting look-and-feel contents according to the fourth embodiment includes:

D1. A look-and-feel content server generates a look-and-feel package according to customization information. The look-and-feel package includes attribute information of the package and look-and-feel element information.

According to this embodiment, the look-and-feel package may directly carry a URI of the package instead of content information of look-and-feel elements. An example of a look-and-feel package is given below. This look-and-feel package is basically the same as the package given in the second embodiment except that content information of look-and-feel elements is not stored in the Wallpaper and Ringtone nodes but instead, a download path of the look-and-feel package is stored directly under Countryside.

```
    <LFCPackage>
         <Name>Countryside</Name>
         <version>100</version>
         <Provider>www.mobilegadget.com</Provider>
         <URI>www.mobilegadget.com/LFC/Package/Countryside.zip</URI>
         <Element Name="Wallpaper">
             <Name>Flower.jpg</Name>
             <Version>100</Version>
         </Element>
         <Element Name="Ringtone">
             <Name>Water.wav</Name>
             <Version>100</Version>
         </Element>
    </LFCPackage>
```

D2. The look-and-feel content server sends the look-and-feel package to a look-and-feel management server.

D3. The look-and-feel management server receives the look-and-feel package, resolves it, generates an appropriate storage object creation command, and then sends the command to a DM server, where the command includes attribute information of the look-and-feel package and look-and-feel element information.

The following is an example of the storage object creation command corresponding to Countryside in the embodiment. Because Ringtone and Wallpaper are processed in the same way, the command related to Ringtone is omitted.

```
     <Add>
        <CmdID>4</CmdID>
        <Item>
          <Target><LocURI>./LFC Deployed/Countryside</LocURI></Target>
          <Meta>
                <Format xmlns='syncml:metinf>node</Format>
          </Meta>
        </Item>
        <Item>
            <Target><LocURI>./LFC
                     Deployed/Countryside/Version</LocURI></Target>
          <Meta>
                <Format xmlns='syncml:metinf>int</Format>
                <Type xmlns='syncml:metinf>text/plain</Type>
          </Meta>
          <Data>1</Data>
        </Item>
        <Item>
            <Target><LocURI>./LFC
                     Deployed/Countryside/Provider</LocURI></Target>
          <Meta>
                <Format xmlns='syncml:metinf>chr</Format>
                <Type xmlns='syncml:metinf>text/plain</Type>
          </Meta>
          <Data>www.mobilegadget.com</Data>
        </Item>
        <Item>
            <Target><LocURI>./LFC
                     Deployed/Countryside/Wallpaper</LocURI></Target>
          <Meta>
                <Format xmlns='syncml:metinf>node</Format>
          </Meta>
        </Item>
        <Item>
            <Target><LocURI>./LFC
                     Deployed/Countryside/Wallpaper/Flower.jpg</LocURI>
          </Target>
          <Meta>
                <Format xmlns='syncml:metinf>node</Format>
          </Meta>
        </Item>
        <Item>
            <Target><LocURI>./LFC
                     Deployed/Countryside/Wallpaper/Flower.jpg/Version
          </LocURI></Target>
          <Meta>
                <Format xmlns='syncml:metinf>int</Format>
                <Type xmlns='syncml:metinf>text/plain</Type>
          </Meta>
          <Data>1</Data>
        </Item>
        <Item>
            <Target><LocURI>./LFC
                     Deployed/Countryside/Wallpaper/Flower.jpg/URI</LocURI>
          </Target>
          <Meta>
                <Format xmlns='syncml:metinf'>chr</Format>
                <Type xmlns='syncml:metinf'>text/plain</Type>
          </Meta>
          <Data> </Data>
        </Item>
        <Item>
            <Target><LocURI>./LFC
                     Deployed/Countryside/Ringtone</LocURI></Target>
          <Meta>
                <Format xmlns='syncml:metinf'>node</Format>
          </Meta>
        </Item>
        ...
    </Add>
```

D4. The DM server sets up a DM connection with a terminal and sends the storage object creation command to the terminal.

D5. The terminal receives the storage object creation command, executes the command to create an appropriate look-and-feel package node in its DM tree, and stores the attribute information of the look-and-feel package and look-and-feel element information to appropriate subnodes of the look-and-feel package node.

According to this embodiment, the terminal may download the look-and-feel package according to the download path (such as www.mobilegadget.com/LFC/Package/Countryside.zip) provided by the look-and-feel management server, store data contents of look-and-feel elements in the package, and store the storage address information of the element data contents into appropriate look-and-feel element subnodes (such as updating the value of ./LFC Deployed/Countryside/Wallpaper/Flower.jpg/URI to \application data\LFC\Countryside\Wallpaper\Flower.jpg); further, the terminal may return the local storage addresses of data contents of the look-and-feel elements to the look-and-feel management server.

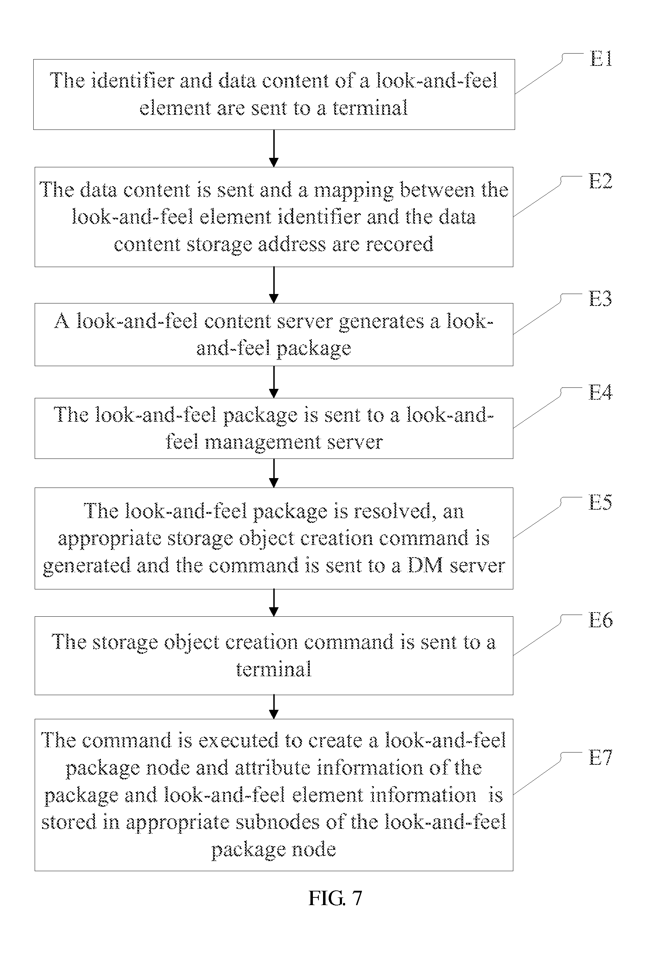

As shown in FIG. 7, a method for sorting look-and-feel contents according to the fifth embodiment includes the steps as follows:

E1. A look-and-feel content server sends the identifier and data content of a custom look-and-feel element to a terminal according to customization information.

E2. The terminal stores the data content of the look-and-feel element and records a mapping between the element identifier and its data content storage address.

E3. The look-and-feel content server generates an appropriate look-and-feel package which includes attribute information of the package and look-and-feel element information, where the look-and-feel element information includes the identifier of the custom look-and-feel element and may further include attribute information of the look-and-feel element.

A specific example of the look-and-feel package is given below. The package is basically the same as the package given in the first embodiment except that the element content information stored in the Wallpaper and Ringtone nodes is not the data content of the look-and-feel element but the URI of the look-and-feel element.

```
    <LFCPackage>
         <Head>
             <Name>Countryside</Name>
             <version>100</version>
             <Provider>www.mobilegadget.com</Provider>
         </Head>
         <Body>
             <Element Name="Wallpaper">
                  <Name>Flower.jpg</Name>
                  <Version>100</Version>
                  <URI> ..url of the flower.jpg.. </URI>
             </Element>
             <Element Name="Ringtone">
                  <Name>Water.wav</Name>
                  <Version>100</Version>
                  <URI> ..url of the water.wav.. </URI>
             </Element>
         </Body>
    </LFCPackage>
```

E4. The look-and-feel content server sends the look-and-feel package to a look-and-feel management server.

E5. The look-and-feel management server receives the look-and-feel package, resolves it, generates an appropriate storage object creation command, and then sends the command to a DM server, where the command includes attribute information of the look-and-feel package and look-and-feel element information.

E6. The DM server sets up a DM connection with the terminal and sends the storage object creation command to the terminal.

E7. The terminal receives the storage object creation command, executes the command to create an appropriate look-and-feel package node in its DM tree, and stores the attribute information of the look-and-feel package, the identifier and attribute information (if any) of the look-and-feel element to appropriate subnodes of the look-and-feel package node.

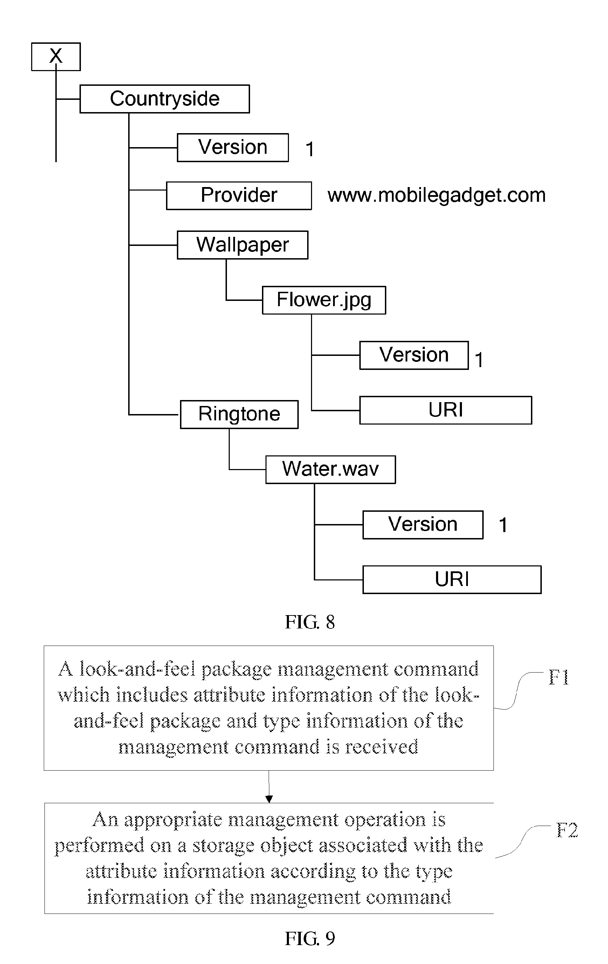

FIG. 8 shows a look-and-feel package node obtained after the look-and-feel package Countryside is sorted according to the embodiment. The look-and-feel package node is basically the same as the node shown in FIG. 4 except that the content information recorded in the middle nodes named Flower.jpg and Water.wav is not data contents but the identifier (such as the URI) of the look-and-feel element.

According to the foregoing embodiments of the look-and-feel content sorting method, the storage object created for the look-and-feel package is a look-and-feel package node created in the DM tree or a directory created in the storage space; the storage object may include the look-and-feel package node and look-and-feel element nodes created in the DM tree; and accordingly, the attribute information of the look-and-feel package is stored in the appropriate subnodes of the look-and-feel package node, and the look-and-feel element information is stored in the appropriate subnodes of the look-and-feel element nodes.

According to other embodiments of the look-and-feel content sorting method, the look-and-feel elements provided by the look-and-feel management server for a user may be in accordance with capability information of the terminal, which may be obtained from the terminal or a capability information server. Specifically, the look-and-feel element information may be data contents of look-and-feel elements, or attribute information and data contents of the look-and-feel elements. Herein, the data contents of look-and-feel elements may be data contents in accordance with the capability information of the terminal.

Those skilled in the art may understand that all or part of the steps in the foregoing embodiments can be implemented by hardware under the instruction of a program. The program may be stored in a computer readable storage medium. When the program is executed, the following steps are performed: obtain a look-and-feel package which includes attribute information of the package and look-and-feel element information; create an appropriate storage object for the look-and-feel package and store the attribute information of the package and look-and-feel element information in association with the storage object. The storage medium herein may be a Read-Only Memory/Random Access Memory (ROM/RAM), a magnetic disk or a compact disk.

As shown in FIG. 9, a method for managing look-and-feel contents according to the first embodiment includes the steps as follows:

F1. A look-and-feel package management command is received. The command includes attribute information of the look-and-feel package and type information of the management command.

The type information of the management command may be Activate, Update, Remove, Lock or Unlock. "Activate" means making the managed look-and-feel package the active look-and-feel package; "Update" means updating the storage object corresponding to the managed look-and-feel package; "Remove" means removing the managed look-and-feel package; and "Lock" means locking the managed look-and-feel package so that the look-and-feel package is not altered.

F2. An appropriate management operation is performed on the storage object in association with the attribute information of the look-and-feel package according to the type information of the management command.

In this embodiment, the storage object may be obtained by sorting the look-and-feel package according to any embodiment of the look-and-feel sorting method provided by the present invention.

This embodiment provides a look-and-feel content management solution based on look-and-feel packages. When a look-and-feel content is managed, the related look-and-feel package can be retrieved according to the attribute information of the package so that the specified look-and-feel package can be managed. Because a look-and-feel package is usually a set of multiple look-and-feel elements, package based management can manage the multiple look-and-feel elements in the package in a same manner without the need of separate operations on each look-and-feel element, and therefore the management efficiency is higher.

A method for managing look-and-feel contents according to the second embodiment includes the steps as follows:

G1. A terminal sends to a look-and-feel content server a look-and-feel content request which carries capability information of the terminal and an identifier of the requested look-and-feel package.

G2. The look-and-feel content server generates a look-and-feel package according to the message, where the package includes attribute information of the package and look-and-feel element information, and data contents in the look-and-feel element information is associated with the capability information of the terminal.

G3. The look-and-feel content server delivers the generated look-and-feel package to the terminal.

G4. The terminal receives the package, resolves it, creates an appropriate directory for the package in its storage space, and stores the attribute information and element information of the look-and-feel package into appropriate subdirectories of the directory.

G5. The look-and-feel management server generates a look-and-feel package management command and sends the command to the terminal, where the command includes the attribute information of the look-and-feel package and type information of the management command.

G6. The terminal receives the look-and-feel package management command and executes the command to perform a management operation on the directory associated with the attribute information of the look-and-feel package according to the type information of the management command.

A specific example of the look-and-feel package management command is given below. After the terminal executes the command, the Countryside folder under the specified directory is removed.
<Remove>\application data\LFC\Countryside</Remove>

A method for managing look-and-feel contents according to the third embodiment includes the steps as follows:

H1. A terminal sends to a look-and-feel content server a look-and-feel content request which carries model information of the terminal and an identifier of the requested look-and-feel package.

H2. The look-and-feel content server obtains terminal capability information corresponding to the terminal model from a capability information server.

H3. According to the look-and-feel content request message, the look-and-feel content server generates a look-and-feel package which includes attribute information of the package and look-and-feel element information, where data contents in the look-and-feel element information is associated with the capability information of the terminal.

H4. The look-and-feel content server sends the look-and-feel package to a look-and-feel management server.

H5. The look-and-feel management server receives the look-and-feel package, resolves it, generates an appropriate storage object creation command, and then sends the command to a DM server, where the command includes attribute information of the look-and-feel package and look-and-feel element information.

H6. The DM server sets up a DM connection with the terminal and sends the storage object creation command to the terminal.

H7. The terminal receives the storage object creation command, executes the command to create an appropriate look-and-feel package node in its DM tree, and stores the attribute information of the look-and-feel package and look-and-feel element information to appropriate subnodes of the look-and-feel package node.

H8. The look-and-feel management server generates a look-and-feel package management command and sends the command to the DM server, where the command includes the attribute information of the look-and-feel package and type information of the management command.

H9. The DM server sends the look-and-feel package management command to the terminal.

H10. The terminal executes the look-and-feel package management command to perform a management operation on the look-and-feel package node associated with the attribute information of the look-and-feel package according to the type information of the management command.

A specific example of the look-and-feel package management command is given below. After the terminal executes the command, the Countryside node is removed from the DM tree.

```
    <Exec>
         <CmdID>3</CmdID>
         <Item>
             <Target>
                  <LocURI>/LFC
 Deployed/Countryside/Operations/Remove</LocURI>
             </Target>
         </Item>
    </Exec>
```

According to other embodiments of the look-and-feel content management method of the present invention, the look-and-feel package management command further includes attribute information of the look-and-feel elements; performing an appropriate management operation on the storage object associated with the attribute information of the look-and-feel package according to the type information of the management command may be: performing an appropriate management operation on the look-and-feel elements associated with the element attribute information according to the type information of the management command in the storage object associated with the package attribute information.

According to still other embodiments of the look-and-feel content management method, before the look-and-feel management server sends the look-and-feel package management command, the look-and-feel management server may judge whether the terminal is able to process the management command according to the capability information of the terminal and if the terminal is able to do so, the look-and-feel management server continues to deliver the look-and-feel package management command.

Those skilled in the art may understand that all or part of the steps in the foregoing embodiments of the method can be implemented by hardware under instruction of a program. The program may be stored in a computer readable storage medium. When the program is executed, the following steps are performed: receiving a look-and-feel package management command which includes attribute information of the package and type information of the management command; and performing an appropriate management operation on the storage object associated with the attribute information of the package according to the type information of the management command. The storage medium herein may be an ROM/RAM, a magnetic disk or a compact disk.

The exemplary embodiments of the terminal, DM server, and look-and-feel management server and look-and-feel management system provided by the present invention will be described in detail.

According to the first embodiment of the terminal of the present invention, the terminal includes: a look-and-feel package receiving unit, configured to receive a look-and-feel package which includes attribute information of the package; and a sorting unit, configured to: resolve the look-and-feel package, create an appropriate storage object for the package, and store the look-and-feel package in association with the storage object.

According to the second embodiment of the terminal of the present invention, the terminal includes: a command receiving unit, configured to receive a storage object creation command applicable to a look-and-feel package which includes attribute information of the package; and a sorting unit, configured to execute the storage object creation command to create an appropriate storage object for the look-and-feel package and store the look-and-feel package in association with the storage object.

According to the third embodiment of the terminal of the present invention, the terminal includes: a command receiving unit, configured to receive a storage object creation command applicable to a look-and-feel package which includes attribute information of the package and look-and-feel element information; a sorting unit, configured to execute the storage object creation command to create an appropriate storage object for the look-and-feel package and store the attribute information of the look-and-feel package and look-and-feel element information in association with the storage object; a management command receiving unit, configured to receive a look-and-feel package management command which includes attribute information of the look-and-feel package and type information of the management command; and a management command executing unit, configured to perform an appropriate management operation on the storage object associated with the attribute information of the look-and-feel package according to the type information of the management command.

Specifically, the storage object associated with the look-and-feel package is a look-and-feel package node created in a DM tree; and accordingly, the sorting unit stores the attribute information of the look-and-feel package and look-and-feel element information in appropriate subnodes of the look-and-feel package node.

Alternatively, the storage object associated with the look-and-feel package is a directory created in a storage space; and accordingly, the sorting unit stores the attribute information of the look-and-feel package and look-and-feel element information in appropriate subdirectories of the directory.

Or, the storage object associated with the look-and-feel package is a look-and-feel package node and look-and-feel element nodes created in a DM tree; and accordingly, the sorting unit stores the attribute information of the look-and-feel package in appropriate subnodes of the look-and-feel package node and stores the look-and-feel element information in appropriate subnodes of the look-and-feel element nodes.

The look-and-feel package management command further includes attribute information of look-and-feel elements; and the management command executing unit is configured to perform an appropriate management operation on the look-and-feel elements associated with the attribute information of look-and-feel elements according to the type information of the management command in the storage object associated with the attribute information of the look-and-feel package.

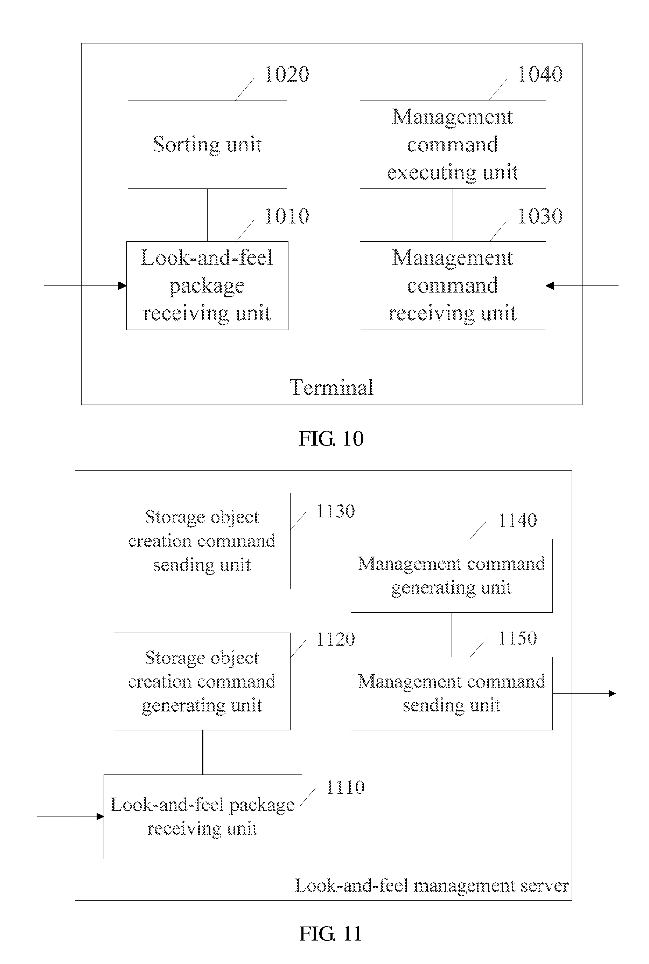

According to the fourth embodiment, as shown in FIG. 10, the terminal includes a look-and-feel package receiving unit 1010, a sorting unit 1020, a management command receiving unit 1030, and a management command executing unit 1040.

The look-and-feel package receiving unit 1010 is configured to receive a look-and-feel package which includes attribute information of the package and look-and-feel element information.

The sorting unit 1020 is configured to: resolve the look-and-feel package, create an appropriate storage object for the look-and-feel package, and store the attribute information of the look-and-feel package and look-and-feel element information in association with the storage object.

The management command receiving unit 1030 is configured to receive a look-and-feel package management command which includes attribute information of the look-and-feel package and type information of the management command.

The management command executing unit 1040 is configured to perform an appropriate management operation on the storage object associated with the attribute information of the look-and-feel package according to the type information of the management command.

According to other embodiments of the terminal, creating an appropriate storage object for the look-and-feel package may be creating an appropriate look-and-feel package node in a DM tree; and accordingly, the sorting unit stores the attribute information and look-and-feel element information of the look-and-feel package in appropriate subnodes of the look-and-feel package node.

According to still other embodiments of the terminal, creating an appropriate storage object for the look-and-feel package may be creating an appropriate directory in a storage space; and accordingly, the sorting unit stores the attribute information of the look-and-feel package and look-and-feel element information in appropriate subdirectories of the directory.

Or, the storage object associated with the look-and-feel package is a look-and-feel package node and look-and-feel element nodes created in a DM tree; and accordingly, the sorting unit stores the attribute information of the look-and-feel package in appropriate subnodes of the look-and-feel package node and stores the look-and-feel element information in appropriate subnodes of the look-and-feel element nodes.

According to other embodiments of the terminal, the look-and-feel package management command further includes attribute information of look-and-feel elements; and accordingly, the management command executing unit is configured to perform an appropriate management operation on the look-and-feel elements associated with the attribute information of look-and-feel elements according to the type information of the management command in the storage object associated with the attribute information of the look-and-feel package.

According to still other embodiments of the terminal, the type information of the management command may be Activate, Update, Remove, Lock or Unlock.

According to the first embodiment of the look-and-feel content server, the look-and-feel content server includes a look-and-feel package generating unit and a look-and-feel package sending unit.

The look-and-feel package generating unit is configured to generate a look-and-feel package which includes attribute information of the package.

The look-and-feel package sending unit is configured to send the look-and-feel package.

The look-and-feel package may further include look-and-feel element information.

According to other embodiments of the look-and-feel content server, the look-and-feel content server further includes a capability information obtaining unit, configured to obtain capability information of the terminal; and look-and-feel element information in the look-and-feel package generated by the look-and-feel package generating unit is the look-and-feel element information associated with the capability information.

According to the first embodiment of the look-and-feel management server of the present invention, the look-and-feel management server includes a management command generating unit and a management command sending unit.

The management command generating unit is configured to generate a look-and-feel package management command which includes attribute information of the look-and-feel package and type information of the management command.

The management command sending unit is configured to send the look-and-feel package management command.

According to the second embodiment of the look-and-feel management server of the present invention, the look-and-feel management server includes a look-and-feel package receiving unit, a storage object creation command generating unit, and a storage object creation command sending unit.

The look-and-feel package receiving unit is configured to receive a look-and-feel package which includes attribute information of the package and may further include look-and-feel element information.

The storage object creation command generating unit is configured to resolve the look-and-feel package and generate an appropriate storage object creation command.

The storage object creation command sending unit is configured to send the storage object creation command.

According to the third embodiment of the look-and-feel management server, as shown in FIG. 11, the look-and-feel management server includes a look-and-feel package receiving unit 1110, a storage object creation command generating unit 1120, a storage object creation command sending unit 1130, a management command generating unit 1140 and a management command sending unit 1150.

The look-and-feel package receiving unit 1110 is configured to receive a look-and-feel package which includes attribute information of the package and look-and-feel element information.

The storage object creation command generating unit 1120 is configured to resolve the look-and-feel package and generate an appropriate storage object creation command.

The storage object creation command sending unit 1130 is configured to send the storage object creation command.

The management command generating unit 1140 is configured to generate a look-and-feel package management command which includes attribute information of the look-and-feel package and type information of the management command.

The management command sending unit 1150 is configured to send the look-and-feel package management command.

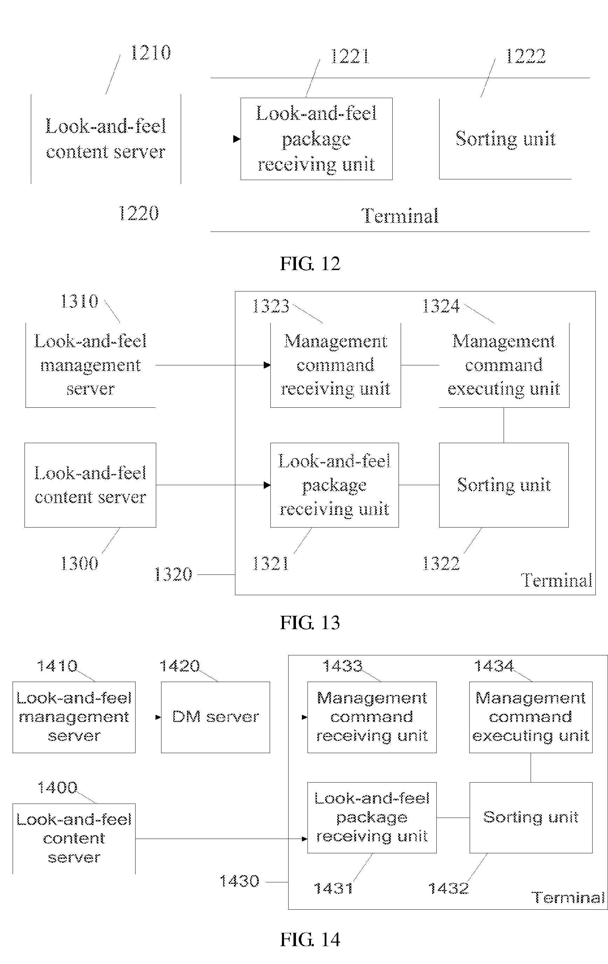

According to the first embodiment of the look-and-feel management system, as shown in FIG. 12, the look-and-feel management system includes a look-and-feel content server 1210 and a terminal 1220.

The look-and-feel content server 1220 is configured to generate a look-and-feel package and send the package to the terminal 1220, where the look-and-feel package includes attribute information of the look-and-feel package and look-and-feel element information.

The terminal 1220 includes a look-and-feel package receiving unit 1221 and a sorting unit 1222.

The look-and-feel package receiving unit 1221 is configured to receive the look-and-feel package.

The sorting unit 1222 is configured to: resolve the look-and-feel package, create an appropriate storage object for the look-and-feel package, and store the attribute information of the look-and-feel package and look-and-feel element information in association with the storage object.

According to the second embodiment of the look-and-feel management system, as shown in FIG. 13, the look-and-feel management system includes a look-and-feel content server 1300, a look-and-feel management server 1310 and a terminal 1320.

The look-and-feel content server 1300 is configured to generate a look-and-feel package and send the package to the terminal 1320, where the look-and-feel package includes attribute information of the look-and-feel package and look-and-feel element information.

The look-and-feel content server 1310 is configured to generate a look-and-feel package management command and send the management command to the terminal 1320, where the look-and-feel package management command includes attribute information of the look-and-feel package and type information of the management command.

The terminal 1320 includes a look-and-feel package receiving unit 1321, a sorting unit 1322, a management command receiving unit 1323 and a management command executing unit 1324.

The look-and-feel package receiving unit 1321 is configured to receive the look-and-feel package.

The sorting unit 1322 is configured to: resolve the look-and-feel package, create an appropriate storage object for the look-and-feel package, and store the attribute information of the look-and-feel package and look-and-feel element information in association with the storage object.

The management command receiving unit 1323 is configured to receive the look-and-feel package management command.

The management command executing unit 1324 is configured to perform an appropriate management operation on the storage object associated with the attribute information of the look-and-feel package according to the type information of the management command.

According to the third embodiment of the look-and-feel management system, as shown in FIG. 14, the look-and-feel management system includes a look-and-feel content server 1400, a look-and-feel management server 1410, a DM server 1420 and a terminal 1430.

The look-and-feel content server 1400 is configured to generate a look-and-feel package and send the package to the terminal 1430, where the look-and-feel package includes attribute information of the look-and-feel package and look-and-feel element information.

The look-and-feel content server 1410 is configured to generate a look-and-feel package management command and send the management command to the terminal 1430 via the DM server 1420, where the look-and-feel package management command includes attribute information of the look-and-feel package and type information of the management command.

The terminal 1430 includes a look-and-feel package receiving unit 1431, a sorting unit 1432, a management command receiving unit 1433 and a management command executing unit 1434.

The look-and-feel package receiving unit 1431 is configured to receive the look-and-feel package.

The sorting unit 1432 is configured to: resolve the look-and-feel package, create an appropriate storage object for the look-and-feel package, and store the attribute information of the look-and-feel package and look-and-feel element information in association with the storage object.

The management command receiving unit 1433 is configured to receive the look-and-feel package management command.

The management command executing unit 1434 is configured to perform an appropriate management operation on the storage object associated with the attribute information of the look-and-feel package according to the type information of the management command.

According to the fourth embodiment of the look-and-feel management system, the look-and-feel management system includes a look-and-feel content server, a look-and-feel management server and a terminal.

The look-and-feel content server is configured to generate a look-and-feel package and send the package to the look-and-feel management server, where the look-and-feel package includes attribute information of the look-and-feel package and look-and-feel element information.

The look-and-feel management server includes a look-and-feel package receiving unit, a storage object creation command generating unit and a storage object creation command sending unit.

The look-and-feel package receiving unit is configured to receive the look-and-feel package which includes at least attribute information of the look-and-feel package and may further include look-and-feel element information.

The storage object creation command generating unit is configured to resolve the look-and-feel package and generate an appropriate storage object creation command for the look-and-feel package.

The storage object creation command sending unit is configured to send the storage object creation command to the terminal, where the command includes the attribute information of the look-and-feel package and look-and-feel element information.

The terminal includes a command receiving unit and a sorting unit.

The command receiving unit is configured to receive the storage object creation command.

The sorting unit is configured to execute the storage object creation command to create an appropriate storage object for the look-and-feel package and store the look-and-feel package in association with the storage object.

According to the fifth embodiment of the look-and-feel management system, the look-and-feel management system includes a look-and-feel content server, a look-and-feel management server and a terminal.

The look-and-feel content server is configured to generate a look-and-feel package and send the package to the look-and-feel management server, where the look-and-feel package includes attribute information of the look-and-feel package and look-and-feel element information.

The look-and-feel management server includes a look-and-feel package receiving unit, a storage object creation command generating unit, a storage object creation command sending unit, a management command generating unit and a management command sending unit.

The look-and-feel package receiving unit is configured to receive the look-and-feel package.

The storage object creation command generating unit is configured to resolve the look-and-feel package and generate an appropriate storage object creation command which includes attribute information of the look-and-feel package and look-and-feel element information.

The storage object creation command sending unit is configured to send the storage object creation command to the terminal.

The management command generating unit is configured to generate a look-and-feel package management command which includes attribute information of the look-and-feel package and type information of the management command.

The management command sending unit is configured to send the look-and-feel management command to the terminal.

The terminal includes a command receiving unit, a sorting unit, a management command receiving unit and a management command executing unit.

The command receiving unit is configured to receive the storage object creation command.

The sorting unit is configured to execute the storage object creation command to create an appropriate storage object for the look-and-feel package and store the attribute information of the look-and-feel package and look-and-feel element information in association with the storage object.

The management command receiving unit is configured to receive the look-and-feel package management command.

The management command executing unit is configured to execute the look-and-feel package management command to perform an appropriate management operation on the storage object associated with the attribute information of the look-and-feel package according to the type information of the management command.

According to the sixth embodiment of the look-and-feel management system of the present invention, the look-and-feel management system includes a look-and-feel content server, a look-and-feel management server, a DM server and a terminal.

The look-and-feel content server is configured to generate a look-and-feel package and send the package to the look-and-feel management server, where the look-and-feel package includes attribute information of the look-and-feel package and look-and-feel element information.

The look-and-feel management server includes a look-and-feel package receiving unit, a storage object creation command generating unit and a storage object creation command sending unit.

The look-and-feel package receiving unit is configured to receive the look-and-feel package.

The storage object creation command generating unit is configured to resolve the look-and-feel package and generate an appropriate storage object creation command which includes attribute information of the look-and-feel package and look-and-feel element information.

The storage object creation command sending unit is configured to send the storage object creation command to the terminal via the DM server.

The terminal includes a command receiving unit and a sorting unit.

The command receiving unit is configured to receive the storage object creation command.

The sorting unit is configured to execute the storage object creation command to create an appropriate storage object for the look-and-feel package and store the attribute information of the look-and-feel package and look-and-feel element information in association with the storage object.

According to the seventh embodiment of the look-and-feel management system of the present invention, the look-and-feel management system includes a look-and-feel content server, a look-and-feel management server, a DM server and a terminal.

The look-and-feel content server is configured to: generate a look-and-feel package and send the package to the look-and-feel management server, where the look-and-feel package includes attribute information of the look-and-feel package and look-and-feel element information.

The look-and-feel management server includes a look-and-feel package receiving unit, a storage object creation command generating unit, a storage object creation command sending unit, a management command generating unit and a management command sending unit.

The look-and-feel package receiving unit is configured to receive the look-and-feel package.

The storage object creation command generating unit is configured to resolve the look-and-feel package and generate an appropriate storage object creation command which includes attribute information of the look-and-feel package and look-and-feel element information.

The storage object creation command sending unit is configured to send the storage object creation command to the terminal via the DM server.

The management command generating unit is configured to generate a look-and-feel package management command which includes attribute information of the look-and-feel package and type information of the management command.

The management command sending unit is configured to send the look-and-feel package management command to the terminal via the DM server.

The terminal includes a command receiving unit, a sorting unit, a management command receiving unit and a management command executing unit.

The command receiving unit is configured to receive the storage object creation command.

The sorting unit is configured to execute the storage object creation command to create an appropriate storage object for the look-and-feel package and store the attribute information of the look-and-feel package and look-and-feel element information in association with the storage object.

The management command receiving unit is configured to receive the look-and-feel package management command.

The management command executing unit is configured to execute the look-and-feel package management command to perform an appropriate management operation on the storage object associated with the attribute information of the look-and-feel package according to the type information of the management command.

According to other embodiments of the look-and-feel management system creating an appropriate storage object for the look-and-feel package may be creating an appropriate look-and-feel package node in a DM tree; and accordingly, the sorting unit stores the attribute information and look-and-feel element information of the look-and-feel package in appropriate subnodes of the look-and-feel package node.

According to still other embodiments of the look-and-feel management system, creating an appropriate storage object for the look-and-feel package may be creating an appropriate directory in a storage space; and accordingly, the sorting unit stores the attribute information of the look-and-feel package and look-and-feel element information in appropriate subdirectories of the directory.

Or, the storage object associated with the look-and-feel package is a look-and-feel package node and look-and-feel element nodes created in a DM tree; and accordingly, the sorting unit stores the attribute information of the look-and-feel package in appropriate subnodes of the look-and-feel package node and stores the look-and-feel element information in appropriate subnodes of the look-and-feel element nodes.

According to other embodiments of the look-and-feel management system of the present invention, the look-and-feel package management command further includes attribute information of look-and-feel elements; and accordingly, the management command executing unit is configured to execute the look-and-feel package management command to perform an appropriate management operation on the look-and-feel elements associated with the attribute information of look-and-feel elements according to the type information of the management command in the storage object associated with the attribute information of the look-and-feel package.

According to still other embodiments of the look-and-feel management system of the present invention, the type information of the management command may be Activate, Update, Remove, Lock or Unlock.

To sum up, the embodiments provide look-and-feel content management based on look-and-feel packages. By storing attribute information of a look-and-feel package in association with the content storage object of the package, multiple look-and-feel packages differentiated by their attribute information can be stored in one terminal so that more look-and-feel contents can be offered to a user.

The embodiments provide a look-and-feel content management solution based on look-and-feel packages. When a look-and-feel content is managed, the related look-and-feel package can be retrieved according to the attribute information of the package so that the specified look-and-feel package can be managed. Because a look-and-feel package is usually a set of multiple look-and-feel elements, package based management can manage the multiple look-and-feel elements in the package in a same manner without the need of separate operations on each look-and-feel element, and therefore the management efficiency is higher.

Although the principle and implementation of the present invention have been described through exemplary embodiments, the present invention is not limited to such embodiments. It is apparent that those skilled in the art can make various modifications and variations to the present invention without departing from the scope of the present invention. The present invention is intended to cover the modifications and variations provided that they fall in the scope of protection defined by the claims or their equivalents.

## Claims

1. A method for sorting look-and-feel contents, comprising:
obtaining a look-and-feel package comprising attribute information of the look-and-feel package; and
creating an appropriate storage object for the look-and-feel package and storing the look-and-feel package in association with the storage object.

2. The method of claim 1, wherein the process of creating the appropriate storage object for the look-and-feel package comprises:
resolving the look-and-feel package and creating the appropriate storage object directly; or, executing a storage object creation command from a look-and-feel management server to create the appropriate storage object for the look-and-feel package.

3. The method of claim 2, wherein obtaining the look-and-feel package comprises:
receiving, by a terminal, the storage object creation command and obtaining the look-and-feel package from the storage object creation command.

4. The method of claim 1, wherein:
the look-and-feel package further comprises look-and-feel element information;
the process of creating the appropriate storage object for the look-and-feel package comprises: creating an appropriate look-and-feel package node in a device management tree; and
the process of storing the look-and-feel package in association with the storage object comprises: storing the attribute information and look-and-feel element information of the look-and-feel package in appropriate subnodes of the look-and-feel package node.

5. The method of claim 1, wherein:
the look-and-feel package further comprises look-and-feel element information;
the process of creating the appropriate storage object for the look-and-feel package comprises: creating an appropriate directory for the look-and-feel package in a storage space; and
the process of storing the look-and-feel package in association with the storage object comprises: storing the attribute information and look-and-feel element information of the look-and-feel package in appropriate subdirectories of the directory.

6. The method of claim 1, wherein:
the look-and-feel package further comprises look-and-feel element information;
the process of creating the appropriate storage object for the look-and-feel package comprises: creating an appropriate look-and-feel package node and appropriate look-and-feel element nodes in a device management tree; and
the process of storing the look-and-feel package in association with the storage object comprises: storing the attribute information of the look-and-feel package in appropriate subnodes of the look-and-feel package node; and storing the look-and-feel element information in appropriate subnodes of the look-and-feel element nodes.

7. The method of claim 4, 5, or 6, wherein:
the look-and-feel element information comprises identifiers of look-and-feel elements; and
before storing the look-and-feel package in association with the storage object, the method further comprises: recording a mapping between identifiers and content storage addresses of the look-and-feel elements.

8. The method of any of claims 1 - 6, wherein the look-and-feel element information is data contents of look-and-feel elements, or attribute information of the look-and-feel elements and the data contents of look-and-feel elements.

9. A method for managing look-and-feel contents, comprising:
receiving a look-and-feel package management command which comprises attribute information of a look-and-feel package and type information of the management command; and
performing an appropriate management operation on a storage object associated with the look-and-feel package according to the type information of the management command.

10. The method of claim 9, wherein the storage object is obtained by sorting the look-and-feel package; and sorting the look-and-feel package comprises:
obtaining the look-and-feel package which comprises attribute information of the look-and-feel package; and
creating an appropriate storage object for the look-and-feel package and storing the look-and-feel package in association with the storage object.

11. The method of claim 9, wherein the storage object is obtained by sorting the look-and-feel package; and sorting the look-and-feel package is implemented by the method according to any one of claims 2-8.

12. The method of claim 9, 10, or 11, wherein:
the look-and-feel package management command further comprises attribute information of look-and-feel elements; and
the process of performing the appropriate management operation on the storage object associated with the look-and-feel package according to the type information of the management command comprises: performing the appropriate management operation on look-and-feel elements associated with the attribute information of look-and-feel elements in the storage object associated with the look-and-feel package according to the type information of the management command.

13. The method of claim 9, 10, or 11, wherein the type information of the management command is Activate, Update, Remove, Lock or Unlock.

14. A terminal, comprising:
a look-and-feel package receiving unit, configuredto receive a look-and-feel package which comprises attribute information of the look-and-feel package; and
a sorting unit, configuredto: resolve the look-and-feel package, create a storage object associated with the package and store the look-and-feel package in association with the storage object.

15. The terminal of claim 14, wherein the look-and-feel package further comprises look-and-feel element information;
the storage object associated with the look-and-feel package is a look-and-feel package node created in a device management tree; and accordingly, the sorting unit stores the attribute information of the look-and-feel package and look-and-feel element information in appropriate subnodes of the look-and-feel package node; or
the storage object associated with the look-and-feel package is a directory created in a storage space; and accordingly, the sorting unit stores the attribute information of the look-and-feel package and look-and-feel element information in appropriate subdirectories of the directory; or
the storage object associated with the look-and-feel package is a look-and-feel package node and look-and-feel element nodes created in a device management tree; and accordingly, the sorting unit stores the attribute information of the look-and-feel package in appropriate subnodes of the look-and-feel package node and stores the look-and-feel element information in appropriate subnodes of the look-and-feel element nodes.

16. The terminal of claim 15, further comprising:
a management command receiving unit, configured to receive a look-and-feel package management command which comprises attribute information of the look-and-feel package and type information of the management command; and
a management command executing unit, configured to perform an appropriate management operation on the storage object associated with the attribute information of the look-and-feel package according to the type information of the management command.

17. The terminal of claim 16, wherein:
the look-and-feel package management command further comprises attribute information of look-and-feel elements; and
the management command executing unit is configured to perform an appropriate management operation on look-and-feel elements associated with the attribute information of look-and-feel elements in the storage object associated with the attribute information of the look-and-feel package according to the type information of the management command.

18. The terminal of claim 14, 15, 16, or 17, wherein the type information of the management command is Activate, Update, Remove, Lock or Unlock.

19. A terminal, comprising:
a command receiving unit, configured to receive a storage object creation command applicable to a look-and-feel package which comprises attribute information of the look-and-feel package; and
a sorting unit, configured to: execute the storage object creation command to create an appropriate storage object for the look-and-feel package and store the look-and-feel package in association with the storage object.

20. The terminal of claim 19, wherein the look-and-feel package further comprises look-and-feel element information;
the storage object associated with the look-and-feel package is a look-and-feel package node created in a device management tree; and accordingly, the sorting unit stores the attribute information and look-and-feel element information of the look-and-feel package in appropriate subnodes of the look-and-feel package node; or
the storage object associated with the look-and-feel package is a directory created in a storage space; and accordingly, the sorting unit stores the attribute information and look-and-feel element information of the look-and-feel package in appropriate subdirectories of the directory; or
the storage object associated with the look-and-feel package is a look-and-feel package node and look-and-feel element nodes created in a device management tree; and accordingly, the sorting unit stores the attribute information of the look-and-feel package in appropriate subnodes of the look-and-feel package node and stores the look-and-feel element information in appropriate subnodes of the look-and-feel element nodes.

21. The terminal of claim 20, further comprising:
a management command receiving unit, configured to receive a look-and-feel package management command which comprises attribute information of the look-and-feel package and type information of the management command; and
a management command executing unit, configured to perform an appropriate management operation on the storage object associated with the attribute information of the look-and-feel package according to the type information of the management command.

22. The terminal of claim 21, wherein:
the look-and-feel package management command further comprises attribute information of look-and-feel elements; and
the management command executing unit is configured to perform an appropriate management operation on look-and-feel elements associated with the attribute information of look-and-feel elements in the storage object associated with the attribute information of the look-and-feel package according to the type information of the management command.

23. The terminal of claim 19, 20, 21, or 22, wherein the type information of the management command is Activate, Update, Remove, Lock or Unlock.

24. A look-and-feel content server, comprising:
a look-and-feel package generating unit, configured to generate a look-and-feel package which comprises attribute information of the look-and-feel package; and
a look-and-feel package sending unit, configured to send the look-and-feel package.

25. The server of claim 24, wherein:
the look-and-feel package further comprises look-and-feel element information;
the look-and-feel content server further comprises a capability information obtaining unit, configured to obtain capability information of a terminal; and
the look-and-feel element information in the look-and-feel package generated by the look-and-feel package generating unit is look-and-feel element information associated with the capability information.

26. A look-and-feel management server, comprising:
a management command generating unit, configured to generate a look-and-feel package management command which comprises attribute information of a look-and-feel package and type information of the management command; and
a management command sending unit, configured to send the look-and-feel management command.

27. A look-and-feel management server, comprising:
a look-and-feel package receiving unit, configured to receive a look-and-feel package which comprises attribute information of the look-and-feel package;
a storage object creation command generating unit, configured to: resolve the look-and-feel package and generate an appropriate storage object creation command; and
a storage object creation command sending unit, configured to send the storage object creation command.

28. A look-and-feel management system, comprising a look-and-feel content server and a terminal, wherein:
the look-and-feel content server is configured to: generate a look-and-feel package and send the package to the terminal, wherein the look-and-feel package comprises attribute information of the look-and-feel package; and
the terminal is configured to: receive the look-and-feel package, create an appropriate storage object for the look-and-feel package and store the look-and-feel package in association with the storage object.
